(19) Europäisches Patentamt

European Patent Office

Office européen des brevets

(11) **EP 0 542 335 B1**

# (12) FASCICULE DE BREVET EUROPEEN

(45) Date de publication et mention
de la délivrance du brevet:
**13.08.1997 Bulletin 1997/33**

(51) Int Cl.6: **H04N 7/32**, H04N 5/14,
G06T 7/20

(21) Numéro de dépôt: **92203248.7**

(22) Date de dépôt: **22.10.1992**

(54) **Dispositif d'estimation de mouvement entre images animées subdivisées en blocs bidimensionnels d'éléments d'image**

Einrichtung zur Schätzung von Bewegung zwischen animierten, in zweidimensionale Bildelementblöcke geteilten Bildern

Device for estimating movement between animated images subdivided into two-dimensional pixed blocks

(84) Etats contractants désignés:
**DE FR GB**

(30) Priorité: **30.10.1991 FR 9113401**

(43) Date de publication de la demande:
**19.05.1993 Bulletin 1993/20**

(73) Titulaires:
• **LABORATOIRES D'ELECTRONIQUE PHILIPS S.A.S.**
**94450 Limeil-Brévannes (FR)**
Etats contractants désignés:
**FR**
• **Philips Electronics N.V.**
**5621 BA Eindhoven (NL)**
Etats contractants désignés:
**DE GB**

(72) Inventeurs:
• **Sirat, Jacques, Société Civile S.P.I.D.**
**F-75008 Paris (FR)**
• **Gobert, Jean, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 358 624          EP-A- 0 358 625**

• **IEEE INTERNATIONAL SYMPOSIUM ON CIRCUITS AND SYSTEMS vol. 2/4, mai 1990, pages 995-998, New Orleans, LA, US; C.-H. HSIEH et al.: "Motion estimation using interblock correlation"**

## Description

La présente invention concerne un dispositif d'estimation de mouvement entre images animées subdivisées en blocs bidimensionnels. Cette invention est utilisable notamment dans le domaine de la télévision. En effet, en télévision à haute définition, il est nécessaire de réduire le volume de données à transmettre ou à stocker. L'une des méthodes de compression des données correspondant aux séquences d'images exploite la redondance temporelle de ces données en codant un bloc de l'image courant à l'aide d'un bloc de l'image précédente décalé d'un vecteur dit vecteur de mouvement. Comme une bonne estimation du mouvement produit une bonne qualité de reconstruction des images, il est avantageux de disposer d'un champ cohérent de vecteurs de mouvement.

La demande de brevet européen EP-A-0 286 192 décrit un dispositif d'estimation de mouvement dans lequel la détermination du vecteur de mouvement associé à un bloc tient compte de la corrélation existant entre blocs voisins. Cette corrélation est en effet exploitée pour L blocs successifs d'une même ligne d'image. Mais, de ce fait, la cohérence des vecteurs de mouvement est ainsi limitée à la direction horizontale et, par ailleurs, la réalisation du dispositif est relativement complexe, en raison même de son principe de mise en oeuvre qui prévoit de séparer les blocs en trois catégories et de classer le bloc courant dans l'une ou l'autre d'elles en considérant l'arbre des séquences possibles de classement dans l'une ou l'autre de ces catégories pour des groupes de L blocs successifs.

Le but de l'invention est de proposer un dispositif d'estimation de mouvement permettant d'obtenir un champ de vecteurs de mouvement plus cohérent que dans le cas de cette solution connue, tout en atteignant une plus grande simplicité de réalisation.

A cet effet, l'invention concerne un dispositif d'estimation de mouvement caractérisé en ce qu'il comprend:

(A) des moyens d'estimation, dans une fenêtre de recherche de taille donnée prise dans l'image qui précède l'image courante, d'un vecteur de mouvement du bloc courant par rapport aux blocs de l'image précédente et de stockage d'un jeu de données d'erreur relatif à ce bloc courant, ledit jeu de données d'erreur comprenant la carte des erreurs de codage pour tous les vecteurs de mouvement possibles dans ladite fenêtre, l'erreur de codage minimale, et le vecteur de mouvement associé à celle-ci et qui constitue ledit vecteur estimé ;
(B) des moyens de calcul pour :

(1) effectuer l'examen :

(a) d'une part dudit jeu de données d'erreur et de jeux de données d'erreur construits de façon similaire et relatifs à deux régions d'image, dites respectivement région précédente et région contiguë, incluant respectivement l'une au moins le bloc qui précède le bloc courant et l'autre au moins un bloc contigu à ce bloc courant et qui ont chacune adopté, respectivement avec ce bloc précédent et avec ce bloc contigu, un vecteur de mouvement estimé commun, et
(b) d'autre part de deux jeux de données d'erreur construits de façon similaire et relatifs aux nouvelles régions, respectivement précédente et contiguë, qui seraient formées par rattachement du bloc courant respectivement à ladite région précédente et à ladite région contiguë ;

(2) et pour décider, selon le résultat de cet examen, soit l'exécution d'un seul desdits rattachements à l'ancienne région précédente ou à l'ancienne région contiguë, par adoption, pour la nouvelle région respectivement précédente ou contiguë ainsi formée, d'un vecteur de mouvement estimé commun au bloc courant et à l'ancienne région concernée ;
(b) soit, à défaut d'un tel rattachement, l'initialisation d'une nouvelle région à partir de ce bloc courant ;

(C) des moyens de mémorisation desdits jeux de données d'erreur construits de façon similaire et de numéros de repérage des régions ;
(D) une unité de contrôle des liaisons entre lesdits moyens d'estimation et de stockage, de calcul, et de mémorisation.

La structure ainsi proposée, qui ne repose plus sur un principe de classification des blocs successifs, fait encore appel à un processus de décision mais d'une manière qui diffère de celle décrite ci-dessus. En effet, la décision relative à chaque bloc courant est prise sans retard, alors qu'elle était différée de L blocs dans la précédente réalisation. Par ailleurs, dans le cas de l'invention, le mode de rattachement des blocs par utilisation de l'additivité des cartes d'erreur des régions déjà balayées et du bloc courant permet d'assurer la croissance progressive de régions homogènes, c'est-à-dire de régions auxquelles est affecté un même vecteur de mouvement, tout en contrôlant exactement la dégradation du critère d'erreur au fur et à mesure du balayage de l'image. En outre, la présence de valeurs de seuils dans les opérations effectuées lors des étapes de comparaison et de décision permet d'ajuster le nombre et la taille des régions homogènes ainsi constituées, pour un rendu plus ou moins précis du mouvement.

Dans un exemple de réalisation particulier, ce dispositif est caractérisé en ce que lesdits moyens d'estimation et de stockage comprennent un circuit d'estimation du mouvement du bloc courant par rapport à ceux des blocs de l'image précédente qui sont inclus dans ladite fenêtre de recherche et de sélection d'un vecteur de mouvement global de ce bloc courant, et en ce que ce procédé d'estimation de mouvement est la méthode BMA, dite par correspondance de blocs et prévoyant la recherche, dans ladite fenêtre, du bloc qui a les propriétés de luminosité les plus proches de celle du bloc courant, cette fenêtre de recherche étant un voisinage du bloc, de taille déterminée par l'amplitude maximale du vecteur de mouvement recherché.

De même, selon une réalisation avantageuse de l'invention, le dispositif proposé est caractérisé en ce que lesdits moyens de mémorisation comprennent :

(a) une première mémoire ou zone de mémoire de stockage du jeu de données d'erreur du bloc courant, tel que déterminé et stocké par ledit circuit d'estimation par comparaison entre ce bloc courant et chacun desdits blocs de l'image précédente contenus dans la fenêtre de recherche ;

(b) des deuxième et troisième mémoires ou zones de mémoire, dites mémoires de travail et destinées, au fur et à mesure du balayage des blocs, au stockage temporaire desdits jeux de données d'erreur construits de façon similaire et relatifs, au moment du balayage du bloc courant, aux régions dites respectivement précédente et contiguë par rapport à ce bloc courant ;

(c) des quatrième et cinquième mémoires ou zones de mémoire, respectivement pour le stockage des jeux de données d'erreur associés, après mise en oeuvre des décisions de rattachement ou d'initialisation appropriées, aux nouvelles régions ainsi constituées au fur et à mesure du balayage des blocs de l'image courante et qui incluent maintenant ledit bloc courant, et pour le stockage de numéros de repérage de ces nouvelles régions.

Par ailleurs, dans une réalisation particulière conforme à l'invention, le dispositif est caractérisé en ce que lesdits moyens de calcul comprennent une unité de calcul pour effectuer la comparaison, en fonction d'au moins un critère prédéterminé, desdits jeux de données d'erreur relatifs d'une part respectivement au bloc courant, à ladite région précédente et à ladite région contiguë, et d'autre part respectivement aux nouvelles régions qui seraient formées par rattachement, et pour décider, selon le résultat de cet examen, l'exécution du rattachement correspondant ou, à défaut, celle de l'initialisation de nouvelle région.

En ce qui concerne lesdits moyens de calcul, le dispositif selon l'invention est de préférence caractérisé en ce que, selon ledit critère prédéterminé, une décision de rattachement du bloc courant à l'une ou à l'autre exclusivement desdites régions précédente et contiguë est prise lorsque, pour l'une seulement des deux régions résultant des deux rattachements possibles, l'une des données, d'un type déterminé, du jeu de données d'erreur de la région qui serait constituée par ledit rattachement reste inférieure à une limite prédéterminée par rapport à la somme des données du même type dans les jeux de données d'erreur construits de façon similaire et relatifs séparément audit bloc courant et à ladite région précédente ou contiguë correspondant au rattachement considéré, seule la situation contraire où les deux rattachements sont possibles conduisant à mettre en oeuvre un deuxième critère prédéterminé pour choisir l'un de ces deux rattachements.

Un perfectionnement de l'invention ainsi proposée consiste alors à opérer le rattachement de chaque bloc courant en considérant préalablement les rattachements similaires effectués lors du traitement de l'image précédente, c'est-à-dire en tenant compte de la segmentation en régions de cette image précédente pour préserver une certaine cohérence temporelle dans les rattachements purement spatiaux réalisés dans l'image courante.

A cet effet, le dispositif selon l'invention est alors caractérisé en ce que, dans ladite situation contraire, il est prévu dans les moyens de mémorisation une sixième mémoire ou zone de mémoire de stockage de numéros de repérage des régions constituées dans l'image qui précède l'image courante, pour la mise en oeuvre dudit deuxième critère prédéterminé par examen des rattachements effectivement réalisés dans ladite image précédente pour le bloc de même position que le bloc courant de l'image courante ou pour un bloc de position voisine limitée par une fenêtre centrée sur la position dudit bloc courant.

Une cohérence temporelle encore plus grande peut être obtenue si l'on opère lesdits rattachements non plus de façon purement spatiale, mais éventuellement par fusion avec une région appartenant à au moins l'image précédant l'image courante. Dans le cas de cette nouvelle variante, il suffit de garder en mémoire les données relatives à toutes les régions constituées lors du balayage de la ou des images précédentes considérées, et de chercher alors à construire progressivement des régions dites spatiotemporelles contenant des blocs qui proviennent d'au moins deux ou de plusieurs images successives et se voyant affecter, à chacune, un seul vecteur de mouvement estimé.

Pour la mise en oeuvre de cette variante perfectionnée, le dispositif selon l'invention est alors caractérisé en ce qu'il comprend une mémoire ou zone de mémoire pour le stockage de jeux de données d'erreur construits de façon similaire et relatifs à chacune des régions dites spatiotemporelles progressivement constituées lors du balayage d'au moins l'image, ou de plusieurs images consécutives, précédant l'image courante, et en ce que l'unité de calcul est prévue pour l'examen, en fonction au moins d'un critère prédéterminé, des jeux de données d'erreur estimées relatifs d'une part respectivement au bloc courant, à la région précédente, à la région contiguë, et à celle desdites régions spatiotemporelles constituées qui, dans l'image précédant ladite image courante, comprend le bloc de même position que le bloc courant ou un bloc de position voisine limitée par la fenêtre de recherche centrée sur la position dudit bloc courant, et d'autre part aux nouvelles régions qui seraient formées par rattachement du bloc courant respectivement à ladite région précédente, à ladite région contiguë, et à ladite région spatiotemporelle, et pour décider, selon le résultat de cet examen, l'exécution du rattachement définitif dudit bloc courant à l'une ou l'autre de ces régions, par adoption d'un vecteur de mouvement estimé commun, ou, à défaut d'un tel rattachement, celle de l'initialisation de nouvelle région à partir du bloc courant.

Enfin, dans une variante encore perfectionnée de l'invention, une approche dite hiérarchique peut être envisagée, en utilisant par exemple un critère analogue à ceux mis en oeuvre pour le rattachement ou non des blocs aux régions déjà constituées : on procède à un examen comparatif d'une ou plusieurs données d'erreur associées au bloc courant (auquel correspond un seul vecteur de mouvement estimé optimal) et d'une ou plusieurs données d'erreur similaires obtenues en divisant ce bloc en quatre sous-blocs et en attribuant à chacun de ces sous-blocs son vecteur de mouvement estimé optimal, et l'on remplace ledit bloc courant par ses quatre sous-blocs si la réduction relative d'erreur correspondante excède un seuil déterminé, et ainsi de suite en affinant ainsi la résolution jusqu'à l'élément d'image éventuellement.

En vue de l'application de ce principe modifié de subdivision de l'image, le dispositif selon l'invention est caractérisé en ce qu'il comprend une huitième mémoire ou zone de mémoire pour le stockage d'une part du jeu de données d'erreur relatif à un bloc de l'image courante et d'autre part de jeux similaires de données d'erreur estimées respectivement pour quatre sous-blocs qui composent ce bloc, et en ce que l'unité de calcul est prévue pour effectuer, préalablement audit examen faisant intervenir le bloc courant ainsi que les régions précédemment constituées et les régions de rattachement possibles, une comparaison en fonction d'un critère prédéterminé d'au moins l'une des données, d'un type déterminé, du jeu de données d'erreur dudit bloc courant et des données d'erreur du même type des sous-blocs et, selon le résultat de cette comparaison préalable, pour opérer ou non la substitution desdits sous-blocs au bloc concerné, ladite substitution étant alors suivie d'un nouveau cycle de comparaison préalable et de substitution éventuelle, et ainsi de suite éventuellement jusqu'à une subdivision locale en éléments d'image, avec modification correspondante du balayage avant la phase de comparaison et rattachement.

Les particularités et avantages de l'invention apparaîtront maintenant de façon plus précise dans la description qui suit et dans les dessins annexés, donnés à titre d'exemples non limitatifs et dans lesquels :

- la figure 1 montre un exemple de réalisation du dispositif selon l'invention ;
- la figure 2 illustre le procédé d'estimation de mouvement dit BMA, qui est décrit plus loin ;
- la figure 3 montre un exemple d'image segmentée en régions homogènes par mise en oeuvre du dispositif de la figure 1.

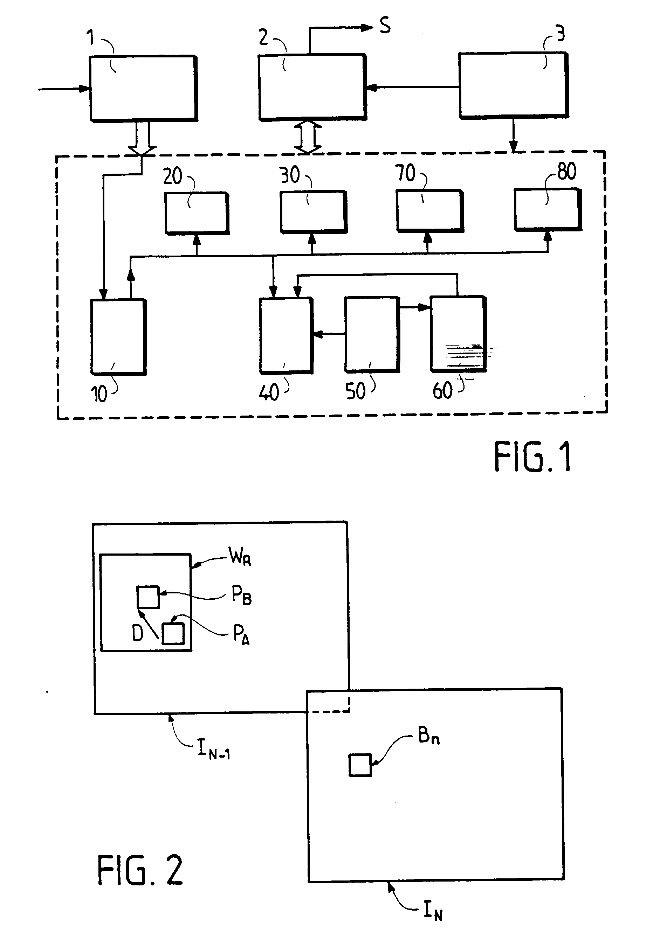

Le dispositif d'estimation selon l'invention comprend tout d'abord, comme indiqué sur la figure 1, un circuit 1 d'estimation de mouvement selon un procédé d'estimation qui est décrit plus loin. Ce circuit 1 calcule selon ledit procédé la carte d'erreur du bloc courant, puis détermine l'erreur minimale et le vecteur de mouvement associés. Ces données sont alors stockées dans une première mémoire 10 de stockage de ce jeu de données relatives au bloc courant. Le dispositif comprend également des deuxième et troisième mémoires de travail 20 et 30, ainsi qu'une quatrième mémoire 40 de stockage de données de régions et une cinquième mémoire 50 de stockage de numéros de régions. A ces éléments 1 à 50 sont enfin associées une unité de calcul 2 ainsi qu'une unité de contrôle 3 de l'ensemble des autres circuits. Bien entendu, on entend ici par mémoire, dans toute la description, soit une mémoire individuelle distincte, soit une zone de mémoire dans une mémoire plus vaste ayant la capacité appropriée pour le stockage de toutes les données nécessaires.

Le fonctionnement de ce dispositif va être maintenant décrit. On précisera préalablement que chaque image est initialement subdivisée en blocs de même taille de par exemple m lignes et l éléments d'image par ligne et qui sont balayés par exemple à partir du bloc supérieur gauche de l'image et en suivant les lignes de l'image. On connaît par ailleurs, par exemple d'après les documents "Displacement measurement and its application in interframe coding", J. Jain, IEEE Trans. on Communications, vol. COM-29, 1981, pp 1799-1808, et "Predictive coding based on efficient motion estimation", R. Srinivassan et K. Rao, IEEE Trans. on Communications, vol. COM-33, 1985, pp 888-891, un procédé d'estimation de mouvement dit "block matching process", ou méthode par correspondance de blocs. Ce procédé d'estimation de mouvement, noté BMA ("Block Matching Algorithm") dans la suite de la description, prévoit, pour chaque bloc courant balayé successivement, de rechercher, dans l'image qui précède l'image courante et sur un voisinage de taille déterminée délimité par une fenêtre de recherche (de dimensions liées à l'amplitude maximale du vecteur de mouvement recherché), le bloc qui, selon un critère prédéterminé, a les propriétés de luminosité les plus proches de celles du bloc courant.

La figure 2, qui illustre ce procédé, montre à titre d'exemple d'une part une image $I_N$ et le bloc courant $B_n$ dans cette image, et d'autre part l'image $I_{N-1}$ précédant l'image $I_N$, la fenêtre de recherche $W_R$, la projection orthogonale $P_B$ du bloc courant $B_n$ de $I_N$ sur $I_{N-1}$ et la position antérieur $P_A$ de $B_n$ (compte tenu du mouvement correspondant matérialisé par le vecteur de mouvement $\vec{D}$) dans l'image $I_{N-1}$. Cette recherche d'un bloc correspondant conduit à établir une carte d'erreurs en fonction des vecteurs de mouvement possibles et à choisir comme vecteur estimé pour le bloc courant le vecteur de mouvement qui rend minimale l'erreur pour ce bloc. Conformément à l'invention, on réalise alors la croissance progressive de régions de l'image en opérant le rattachement du bloc courant à une région adjacente comprenant des blocs déjà balayés et en assurant ainsi la croissance de régions homogènes, c'est-à-dire de même vecteur de mouvement estimé.

Le circuit d'estimation de mouvement 1 réalise donc tout d'abord, selon le procédé BMA, l'opération de sélection, dans une fenêtre de vecteurs de mouvement possibles (de par exemple M lignes et L colonnes), de celui de ces vecteurs qui minimise le critère d'erreur retenu. On construit pour cela une carte d'erreurs qui, pour chaque déplacement global D du bloc, donne l'erreur de codage du bloc, notée E(D). On prend par exemple comme grandeur, pour l'erreur, la moyenne des valeurs absolues de la différence de luminosité entre les points d'image du bloc courant et ceux du bloc considéré dans l'image précédente. Cette erreur s'écrit alors :

$$E(D) = \sum_{bloc} |I(x,y) - I(x - d_x, y - d_y)|$$

Dans cette expression, x et y désignent les coordonnées des points d'image du bloc courant, I(x,y) l'intensité lumineuse du point d'image de coordonnées (x,y), et $d_x$ et $d_y$ les composantes du vecteur de mouvement D. Celui des vecteurs D pour lequel est obtenu le minimum de E(D) est le vecteur représentatif du mouvement global du bloc, et ce vecteur est transmis pour le codage. La carte d'erreurs, l'erreur minimale et le vecteur de mouvement estimé constituent un jeu de données d'erreur stocké dans la mémoire 10. Dans la suite de la description, et par souci de concision, on ne désignera plus que par procédé BMA l'application de cette méthode de sélection d'une erreur minimale sur un bloc et donc de sélection du vecteur de mouvement correspondant comme vecteur estimé pour ce bloc.

On a vu qu'au fur et à mesure du balayage des blocs, on assure la croissance de régions avec lesquelles vient fusionner le bloc courant. Ce processus doit être initialisé. Le premier bloc balayé est donc affecté à une première région, qui est numérotée en commençant par 1 et dont les données initiales sont donc celles de ce premier bloc :

(a) la carte d'erreurs E(D) est, initialement, celle du premier bloc courant, telle que fournie par le circuit d'estimation de mouvement 1 ;
(b) l'erreur minimale $E_{min} = min(E(D))$ est, dans ce cas, l'erreur minimale dans la carte d'erreurs du premier bloc courant ;

(c) le vecteur de mouvement optimal D est, ici, celui auquel correspond ladite erreur minimale ;
(d) pour chaque bloc traité, on conserve le numéro de la région à laquelle il a été affecté, ici le numéro 1 pour le premier bloc ainsi considéré.

Le balayage, ligne par ligne, des blocs de l'image peut alors se poursuivre. Les situations qui peuvent être envisagées pour chaque nouveau bloc courant sont, dans l'exemple ici décrit, les suivantes :

(a) fusion avec la région adjacente gauche ;
(b) fusion avec la région adjacente supérieure ;
(c) initialisation d'une nouvelle région.

Bien entendu, dans le cas du premier bloc d'une ligne, il n'y a pas de région adjacente gauche, et, dans celui des blocs de toute la première ligne, il n'y a pas de région adjacente supérieure. Ces deux situations particulières sont évidemment exclues des hypothèses envisagées au moment du processus de décision de fusion maintenant décrit.

Pour décider d'opérer la fusion du bloc courant avec une région (hypothèse (a) ou (b)) ou au contraire d'initialiser une nouvelle région (hypothèse (c)), une décision est nécessaire, et celle-ci prend en compte, dans l'exemple décrit, les trois catégories d'éléments de décision suivantes :

(1) pour le bloc courant $B_n$ :

- sa carte d'erreurs, donnant, pour chaque déplacement de ce bloc testé dans la fenêtre des vecteurs de mouvement possibles, l'erreur de codage $E(D)_B$ ;
- dans cette carte d'erreurs du bloc courant, l'erreur minimale $E_{min}(B) = min(E(D)_B)$ et le vecteur de mouvement associé ;

(2) pour chaque ancienne région $R_A$ (gauche ou supérieure) :

- sa carte d'erreurs respective, donnant, pour chaque déplacement de cette région testé dans une (autre) fenêtre des vecteurs de mouvement possibles, l'erreur de codage $E(D)_r$ ;
- dans cette carte d'erreurs respective de la région $R_A$ considérée, l'erreur minimale $E_{min}(R_A) = min(E(D)_R)$ ;
- l'erreur dite BMA et notée $E(R_A)_{BMA}$, commise en attribuant à tous les blocs qui composent ladite ancienne région $R_A$ un seul vecteur de mouvement, à savoir le vecteur de mouvement optimal correspondant à l'erreur minimale $E_{min}(R_A)$ ;

(3) de même, pour chaque nouvelle région $R_N$ constituée en associant soit l'ancienne région $R_A$ gauche, soit l'ancienne région $R_A$ supérieure au bloc courant $B_n$ :

-   sa carte d'erreurs respective, établie en additionnant celle dudit bloc courant et celle de l'une, ou de l'autre, des deux anciennes régions considérées ;
-   dans cette carte d'erreurs respective de la région $R_N$ considérée, l'erreur minimale $E_{min}$ $(R_N)$ ;
-   l'erreur $E(R_N)_{BMA}$ commise en attribuant, comme ci-dessus, à tous les blocs qui composent ladite nouvelle région $R_N$ un seul vecteur de mouvement, à savoir le vecteur de mouvement optimal correspondant à l'erreur minimale $E_{min}$ $(R_N)$.

Ces éléments de décision nécessaires constituent donc des jeux de données d'erreur qui sont stockés dans les diverses mémoires prévues dans le dispositif. La première mémoire 10 stocke la carte d'erreurs du bloc courant, ainsi que l'erreur minimale de cette carte et le vecteur de mouvement associé. La deuxième mémoire 20 et la troisième mémoire 30 stockent respectivement, pour chacune des régions gauche et supérieure, sa carte d'erreur ainsi que l'erreur minimale associée, l'erreur BMA correspondante, et le vecteur de mouvement associé à ladite erreur minimale. Les informations dites de région ainsi stockées provisoirement en mémoires 20 et 3() sont également stockées, cette fois pour toutes les régions de l'image, et progressivement au fur et à mesure du balayage, dans la quatrième mémoire 40, les numéros de repérage desdites régions étant, comme on l'a vu, stockés dans la cinquième mémoire 5(). Ces stockages en mémoire 40 et en mémoire 50 interviennent après les opérations de fusion ou d'initialisation maintenant décrites.

Disposant maintenant de ces différents éléments, on décide en effet d'opérer la fusion (a), la fusion (b), ou l'initialisation (c), en fonction d'un critère d'inégalité déterminé dont on veut qu'il permette de contrôler ou de limiter la dégradation de la qualité de la restitution ultérieure du mouvement. On peut par exemple imposer à l'erreur minimale $E_{min}(R_N)$ de la nouvelle région $R_N$ de rester inférieure ou égale à la somme, augmentée d'un seuil en général réglable, de l'erreur minimale $E_{min}(B)$ du bloc courant et de l'erreur BMA de l'ancienne région, ce qui se traduit par l'inégalité :

$$E_{min}(R_N) \leq (1 + s_1)(E(R_A)_{BMA} + E_{min}(B))$$

où $s_1$ est la valeur du seuil. Cet exemple n'est bien entendu pas limitatif, et l'on peut, par le choix d'autres types d'inégalités, fixer d'autres critères de contrôle des caractéristiques de la nouvelle région par rapport à celles de l'ancienne région considérée et à celles du bloc courant. On peut aussi, par le choix de valeurs plus ou moins élevées pour les seuils figurant dans les expressions de ces inégalités, ajuster effectivement la dégradation de la qualité de restitution du mouvement. Il faut en effet noter que ces valeurs de seuil sont choisies de façon à réaliser un compromis entre cette qualité de restitution et la taille des régions homogènes constituées, de faibles valeurs de seuil assurant cette qualité mais avec un nombre de régions plus élevé et de surface plus faible, et des valeurs plus élevées permettant de réduire le nombre de ces régions et d'augmenter leur taille mais au détriment de ladite qualité.

Le rattachement final du bloc courant à une région (soit à la région adjacente gauche, soit à la région adjacente supérieure, soit à une nouvelle région initialisée avec ce bloc lui-même) est réalisé ici en suivant les étapes de comparaison définies ci-dessus, qui conduisent à quatre situations distinctes :

(1) la fusion du bloc courant avec l'ancienne région gauche est acceptée (application d'un premier critère d'inégalité) et celle de ce bloc avec l'ancienne région supérieure est refusée (application d'un deuxième critère d'inégalité, éventuellement identique au premier) ;
(2) la fusion du bloc courant avec l'ancienne région gauche est refusée (application du premier critère) et celle de ce bloc avec l'ancienne région supérieure est acceptée (application du deuxième critère) ;
(3) la fusion du bloc courant avec l'une ou l'autre des anciennes régions gauche et supérieure est refusée (application de ces deux premiers critères) et il y a, avec ce bloc, initialisation d'une nouvelle région ;
(4) aucune de ces deux fusions n'est refusée (application des deux premiers critères), et, pour choisir entre l'une et l'autre, il faut introduire un troisième (un deuxième, si les deux premiers sont identiques) critère, par exemple sélectionner entre une nouvelle région gauche et une nouvelle région supérieure celle qui a la plus grande taille, ou bien choisir celle dont la carte d'erreurs comprend la valeur la plus faible, sans que, là non plus, ces exemples de critère soient limitatifs.

Cette attribution finale du bloc courant est réalisée par l'unité de calcul 2 qui reçoit des première, deuxième et troisième mémoires 10 à 30 les jeux de données liés respectivement au bloc courant, à l'ancienne région gauche et à l'ancienne région supérieure et détermine, à partir de l'ensemble de ces informations, toutes les données que l'on obtiendrait après fusion éventuelle du bloc avec l'une de ces deux anciennes régions, à savoir les cartes d'erreur des nouvelles régions obtenues dans l'un ou l'autre cas de fusion, ainsi que les erreurs minimales et les erreurs BMA associées à ces nouvelles régions possibles. Ces nouvelles données, associées à une nouvelle région gauche ou à une nouvelle région supérieure viennent alors se substituer, dans les deuxième et troisième mémoires de travail 20 et 30, aux jeux de données d'erreur qui concernaient les anciennes régions gauche et supérieure.

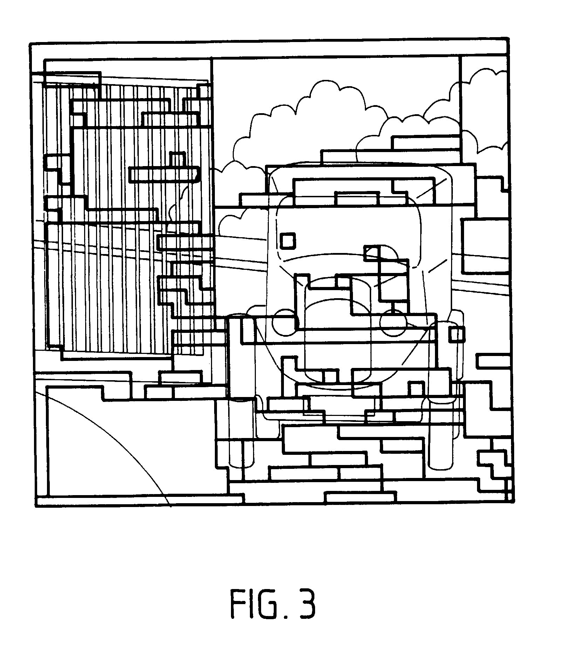

Ayant opéré cette première détermination, l'unité de calcul 2 détermine ensuite à quelle région le bloc courant est effectivement attribué (région gauche, région supérieure, nouvelle région initialisée) et les données relatives à cette région choisie sont recopiées dans la quatrième mémoire 40 de stockage de données de région. En même temps que ce stockage en mémoire 40, l'unité de contrôle 3 commande l'écriture, dans la cinquième mémoire 50, du numéro de repérage de la région qui vient d'être associée au bloc courant. Ainsi, lorsque, bloc après bloc, l'image a été entièrement balayée, les vecteurs de mouvement optimaux sont retrouvés pour chaque bloc en consultant d'une part la cinquième mémoire 50, qui délivre le numéro de région correspondant à ce bloc, et d'autre part la quatrième mémoire 40, qui délivre le vecteur de mouvement estimé associé à la région affectée de ce numéro, puis délivrés par l'unité de calcul 2, sur sa sortie S. La figure 3, qui représente une voiture provenant d'une rue bordée d'arbres et franchissant une grille pour venir en stationnement, montre un exemple, purement illustratif, d'image segmentée en régions homogènes par mise en oeuvre du dispositif qui vient d'être décrit.

Bien entendu, la présente invention n'est pas limitée à l'exemple de réalisation décrit, à partir duquel des variantes peuvent être proposées sans pour cela sortir du cadre de cette invention. En particulier, dans la quatrième situation évoquée ci-dessus (lorsqu'aucune des deux fusions possibles n'est refusée), l'indécision peut être levée en donnant la préférence à celle qui préserve la cohérence temporelle, c'est-à-dire la cohérence par rapport à l'image précédant l'image courante. Par exemple, on donnera la préférence à la fusion qui correspond au cas où le bloc courant et le bloc qui le précède (bloc gauche) - ou le bloc qui est juste au-dessus de lui dans la ligne précédente de la même image (bloc supérieur) - correspondent, dans l'image précédente, à des blocs appartenant à une même région. Cette recherche de cohérence temporelle est possible si l'on associe à l'unité de calcul 2 une sixième mémoire ou zone de mémoire 60 permettant, au cours du balayage ligne par ligne de l'image précédente, de stocker les numéros de repérage des régions constituées dans cette image précédente. En présence de telles informations, ladite unité de calcul 2 peut départager les deux fusions possibles selon le critère qui vient d'être précisé. Ce critère n'est pas limitatif, et l'on peut par exemple comparer le bloc courant et le bloc gauche ou supérieur de l'image courante non plus avec les blocs qui ont la même position dans ladite image précédente, mais avec des blocs de position voisine limitée (dans cette image précédente) par une fenêtre centrée sur la position dudit bloc courant.

Cette extension à la recherche d'une cohérence temporelle entre les vecteurs de mouvement estimés peut aussi être réalisée dans une autre variante de réalisation du dispositif selon l'invention. En effet, au lieu de ne construire des régions homogènes que dans l'image courante, on peut chercher à construire des régions dites spatiotemporelles (en ce sens qu'elles englobent des blocs appartenant à différentes images successives) auxquelles, là encore, est affecté un seul vecteur de mouvement estimé. Cette solution est particulièrement adaptée au cas de mouvements relativement uniformes. Sa mise en oeuvre implique de conserver en mémoire, (par exemple dans la quatrième mémoire 40 dont la taille peut être prévue à cet effet) des données d'erreur (similaires aux précédentes) relatives à chacune desdites régions spatiotemporelles progressivement constituées lors du balayage de plusieurs images consécutives précédant l'image courante (cette recherche de cohérence temporelle ne concerne évidemment pas la première image d'une séquence, et, pour la deuxième image, se limite à une image antérieure, la première).

L'unité de calcul 2 effectue comme précédemment un examen comparatif entre les jeux de données d'erreur associés au bloc courant, aux régions gauche et supérieure dans la même image que ce bloc courant, et, en prévoyant une nouvelle mémoire (ou zone de mémoire) de travail 70, auxdites régions spatiotemporelles déjà constituées à partir de blocs provenant de plusieurs images successives (il faut noter que même ces régions gauche et supérieure peuvent déjà être de telles régions spatiotemporelles, lesdits blocs gauche ou supérieur de l'image courante pouvant avoir été précédemment affectés à une région spatiotemporelle déjà constituée). Là encore, de façon similaire à ce qui avait été précisé dans le cas purement spatial, on peut rappeler les situations qui sont envisagées, lors du balayage de l'image courante, pour la recherche de rattachement de chaque nouveau bloc courant :

(a) fusion avec une région contenant au moins un bloc dans une fenêtre de l'image précédente sensiblement centrée sur les coordonnées centrales du bloc courant ;
(b) fusion avec une région initialisée dans l'image courante, c'est-à-dire avec la région adjacente gauche ou avec la région adjacente supérieure (comme pour les situations (a) ou (b) du mode de fonctionnement purement spatial) ;
(c) initialisation d'une nouvelle région (comme pour la situation (c) du mode de fonctionnement purement spatial).

Selon le résultat des comparaisons entre données d'erreur, l'unité de calcul 2 choisit alors entre ces diverses situations et, comme précédemment, l'exécution de la décision prise conduit soit au rattachement du bloc courant à une région déjà constituée, purement spatiale ou bien spatiotemporelle, soit, à défaut, à l'initialisation, avec ce bloc lui-même, d'une nouvelle région, avec accompagnement d'un numéro d'ordre de celle-ci. Pour utiliser au mieux les ressources de mémoire, il est intéressant et avantageux d'éliminer de la mémoire ou zone de mémoire 40 les jeux de données des régions qui ne contiennent pas de blocs de l'image qui vient d'être balayée. En effet, ces régions-là ne pourront plus être sélectionnées, dans le cadre des comparaisons effectuées par l'unité de calcul 2, comme régions de rattachement possible du bloc courant.

Une troisième variante de réalisation peut enfin être proposée, et qui consiste à envisager un mode de fonctionnement dit hiérarchique. Dans ce cas, le dispositif selon l'invention comprend une huitième mémoire ou zone de mémoire de travail 80, destinée à stocker d'une part les données d'erreur associées au bloc courant de l'image courante et d'autre part les données d'erreur similaires pouvant être estimées pour quatre sous-blocs ici de taille identique qui composent ce bloc. Avant d'effectuer les comparaisons prévues entre les données d'erreur du bloc courant et celles des régions déjà constituées, l'unité de calcul 2 opère, en fonction d'un critère prédéterminé qui peut par exemple être exactement de même nature que celui envisagé précédenmnment pour décider ou non d'un rattachement du bloc courant à l'une de ces régions déjà constituées, une comparaison de ces données d'erreur du bloc et de celles des quatre sous-blocs correspondants. Selon le résultat de cette comparaison préalable, l'unité de calcul 2 décide alors de substituer ou non lesdits sous-blocs au bloc correspondant, ce qui modifie la subdivision locale de l'image, puis reprend un nouveau cycle de comparaison préalable et de substitution éventuelle, ces substitutions pouvant conduire jusqu'à la subdivision locale de l'image en éléments d'image. Le balayage ultérieur des blocs pour examen des rattachements possibles conformément à l'invention est alors modifié de façon à ce qu'il soit réalisé selon la plus petite subdivision d'image obtenue et qu'aucun des sous-blocs formés n'échappe audit balayage.

D'autres variantes peuvent encore être signalées, par exemple celles qui ont trait au mode de balayage. En effet, le balayage traditionnel d'une image, de gauche à droite et de haut en bas, ne constitue pas une limitation de l'invention, et il est manifeste que les images (l'image courante et la ou les images précédentes) peuvent être balayées de façon quelconque, les blocs qui subdivisent l'image (eux-mêmes d'une taille quelconque pouvant descendre jusqu'à celle de l'élément d'image) étant simplement balayés selon une séquence définie, mais dans un ordre quelconque et pas nécessairement en une seule fois. Il peut par exemple être prévu un balayage de plusieurs zones d'image distinctes, la mise en oeuvre du dispositif selon l'invention intervenant alors sur chacune de ces zones d'image.

En généralisant ainsi le mode de balayage utilisé dans le cadre de l'invention, il reste toujours possible de définir des régions de rattachement du bloc courant de la zone d'image considérée : au lieu de la région gauche, on parlera, pour définir la fraction d'image courante ou de zone d'image courante déjà balayée (ou même la région spatiotemporelle) qui inclut le bloc dit bloc précédent, de région précédente, et, au lieu de la région supérieure, on emploiera, pour définir la ou les fractions d'image courante ou de zone d'image courante déjà balayées (ou même, comme ci-dessus, la ou les régions spatiotemporelles) qui incluent au moins un ou plusieurs blocs dits contigus au bloc courant, l'appellation de régions contiguës, ces régions pouvant en effet, selon le mode de subdivision de l'image ou de la zone d'image, être plusieurs à toucher le bloc courant et à être donc candidates au rattachement de ce bloc courant. Les mêmes appellations de région précédente et de région(s) contiguë(s) sont alors employées pour les régions constituées après réalisation du rattachement du bloc courant. Dans tous les cas, comme précédemment, si aucun rattachement n'est possible, il y a initialisation d'une nouvelle région, accompagnée d'un nouveau numéro d'ordre.

On signalera enfin que des mémoires ou zones de mémoire représentées ou citées comme distinctes peuvent en réalité être regroupées, l'essentiel étant qu'à l'intérieur du cadre représenté en trait interrompu sur la figure 1 soient présentes les fonctions de mémorisation nécessaires pour la mise en oeuvre du dispositif selon l'invention, dans ses diverses variantes de réalisation.

**Revendications**

1. Dispositif d'estimation de mouvement entre images animées subdivisées en blocs bidimensionnels, caractérisé en ce qu'il comprend :

(A) des moyens d'estimation, dans une fenêtre de recherche de taille donnée prise dans l'image qui précède l'image courante, d'un vecteur de mouvement du bloc courant par rapport aux blocs de l'image précédente et de stockage d'un jeu de données d'erreur relatif à ce bloc courant, ledit jeu de données d'erreur comprenant la carte des erreurs de codage pour tous les vecteurs de mouvement possibles dans ladite fenêtre, l'erreur de codage minimale, et le vecteur de mouvement associé à celle-ci et qui constitue ledit vecteur estimé ;
(B) des moyens de calcul pour :

(1) effectuer l'examen :

(a) d'une part dudit jeu de données d'erreur et de jeux de données d'erreur construits de façon similaire et relatifs à deux régions d'image, dites respectivement région précédente et région contiguë, incluant respectivement l'une au moins le bloc qui précède le bloc courant et l'autre au moins un bloc contigu à ce bloc courant et qui ont chacune adopté, respectivement avec ce bloc précédent et avec ce bloc contigu, un vecteur de mouvement estimé commun, et

(b) d'autre part de deux jeux de données d'erreur construits de façon similaire et relatifs aux nouvelles régions, respectivement précédente et contiguë, qui seraient formées par rattachement du bloc courant respectivement à ladite région précédente et à ladite région contiguë ;

(2) et pour décider, selon le résultat de cet examen :

(a) soit l'exécution d'un seul desdits rattachements à l'ancienne région précédente ou à l'ancienne région contiguë, par adoption, pour la nouvelle région respectivement précédente ou contiguë ainsi formée, d'un vecteur de mouvement estimé commun au bloc courant et à l'ancienne région concernée ;
(b) soit, à défaut d'un tel rattachement, l'initialisation d'une nouvelle région à partir de ce bloc courant ;

(C) des moyens de mémorisation desdits jeux de données d'erreur construits de façon similaire et de numéros de repérage des régions ;
(D) une unité de contrôle des liaisons entre lesdits moyens d'estimation et de stockage, de calcul, et de mémorisation.

2. Dispositif selon la revendication 1, caractérisé en ce que lesdits moyens d'estimation et de stockage comprennent un circuit d'estimation du mouvement du bloc courant par rapport à ceux des blocs de l'image précédente qui sont inclus dans ladite fenêtre de recherche et de sélection d'un vecteur de mouvement global de ce bloc courant, et en ce que ce procédé d'estimation de mouvement est la méthode BMA, dite par correspondance de blocs et prévoyant la recherche, dans ladite fenêtre, du bloc qui a les propriétés de luminosité les plus proches de celle du bloc courant, cette fenêtre de recherche étant un voisinage du bloc, de taille déterminée par l'amplitude maximale du vecteur de mouvement recherché.

3. Dispositif selon la revendication 2, caractérisé en ce que lesdits moyens de mémorisation comprennent :

(a) une première mémoire ou zone de mémoire de stockage du jeu de données d'erreur du bloc courant, tel que déterminé et stocké par ledit circuit d'estimation par comparaison entre ce bloc courant et chacun desdits blocs de l'image précédente contenus dans la fenêtre de recherche ;
(b) des deuxième et troisième mémoires ou zones de mémoire, dites mémoires de travail et destinées, au fur et à mesure du balayage des blocs, au stockage temporaire desdits jeux de données d'erreur construits de façon similaire et relatifs, au moment du balayage du bloc courant, aux régions dites respectivement précédente et contiguë par rapport à ce bloc courant ;
(c) des quatrième et cinquième mémoires ou zones de mémoire, respectivement pour le stockage des jeux de données d'erreur associés, après mise en oeuvre des décisions de rattachement ou d'initialisation appropriées, aux nouvelles régions ainsi constituées au fur et à mesure du balayage des blocs de l'image courante et qui incluent maintenant ledit bloc courant, et pour le stockage de numéros de repérage de ces nouvelles régions.

4. Dispositif selon l'une des revendications 1 à 3, caractérisé en ce que lesdits moyens de calcul comprennent une unité de calcul pour effectuer la comparaison, en fonction d'au moins un critère prédéterminé, desdits jeux de données d'erreur relatifs d'une part respectivement au bloc courant, à ladite région précédente et à ladite région contiguë, et d'autre part respectivement aux nouvelles régions qui seraient formées par rattachement, et pour décider, selon le résultat de cet examen, l'exécution du rattachement correspondant ou, à défaut, celle de l'initialisation de nouvelle région.

5. Dispositif selon la revendication 4, caractérisé en ce que, selon ledit critère prédéterminé, une décision de rattachement du bloc courant à l'une ou à l'autre exclusivement desdites régions précédente et contiguë est prise lorsque, pour l'une seulement des deux régions résultant des deux rattachements possibles, l'une des données, d'un type déterminé, du jeu de données d'erreur de la région qui serait constituée par ledit rattachement reste inférieure à une limite prédéterminée par rapport à la somme des données du même type dans les jeux de données d'erreur construits de façon similaire et relatifs séparément audit bloc courant et à ladite région précédente ou contiguë correspondant au rattachement considéré, seule la situation contraire où les deux rattachements sont possibles conduisant à mettre en oeuvre un deuxième critère prédéterminé pour choisir l'un de ces deux rattachements.

6. Dispositif selon la revendication 5, caractérisé en ce que, dans ladite situation contraire, il est prévu dans lesdits moyens de mémorisation une sixième mémoire ou zone de mémoire de stockage de numéros de repérage des régions constituées dans l'image qui précède l'image courante, pour la mise en oeuvre dudit deuxième critère prédéterminé par examen des rattachements effectivement réalisés dans ladite image précédente pour le bloc de même position que le bloc courant de l'image courante ou pour un bloc de position voisine limitée par une fenêtre centrée sur la position dudit bloc courant.

7. Dispositif selon l'une des revendications 3 et 4, caractérisé en ce qu'il comprend une mémoire ou zone de mémoire pour le stockage de jeux de données d'erreur construits de façon similaire et relatifs à chacune des régions dites spatiotemporelles progressivement constituées lors du balayage d'au moins l'image, ou de plusieurs images consécutives, précédant l'image courante, et en ce que l'unité de calcul est prévue pour effectuer l'examen, en fonction au moins d'un critère prédéterminé, des jeux de données d'erreur estimées relatifs d'une part respectivement au bloc courant, à la région précédente, à la région contiguë, et à celle desdites régions spatiotemporelles constituées qui, dans l'image précédant ladite image courante, comprend le bloc de même position que le bloc courant ou un bloc de position voisine limitée par la fenêtre de recherche centrée sur la position dudit bloc courant, et d'autre part aux nouvelles régions qui seraient formées par rattachement du bloc courant respectivement à ladite région précédente, à ladite région contiguë, et à ladite région spatiotemporelle, et pour décider, selon le résultat de cet examen, l'exécution du rattachement définitif dudit bloc courant à l'une ou l'autre de ces régions, par adoption d'un vecteur de mouvement estimé commun, ou, à défaut d'un tel rattachement, celle de l'initialisation de nouvelle région à partir du bloc courant.

8. Dispositif selon l'une des revendications 3 à 7, caractérisé en ce qu'il comprend une huitième mémoire ou zone de mémoire pour le stockage d'une part du jeu de données d'erreur relatif à un bloc de l'image courante et d'autre part de jeux similaires de données d'erreur estimées respectivement pour quatre sous-blocs qui composent ce bloc, et en ce que l'unité de calcul est prévue pour effectuer, préalablement audit examen faisant intervenir le bloc courant ainsi que les régions précédemment constituées et les régions de rattachement possibles, une comparaison en fonction d'un critère prédéterminé d'au moins l'une des données, d'un type déterminé, du jeu de données d'erreur dudit bloc courant et des données d'erreur du même type des sous-blocs et, selon le résultat de cette comparaison préalable, pour opérer ou non la substitution desdits sous-blocs au bloc concerné, ladite substitution étant alors suivie d'un nouveau cycle de comparaison préalable et de substitution éventuelle, et ainsi de suite éventuellement jusqu'à une subdivision locale en éléments d'image, avec modification correspondante du balayage avant la phase de comparaison et rattachement.

**Patentansprüche**

1. Anordnung zur Bewegungsabschätzung zwischen animierten, in zweidimensionale Pixelblöcke aufgeteilten Bildern, <u>dadurch gekennzeichnet,</u> daß sie folgendes umfaßt:

(A) Mittel zur Abschätzung eines Bewegungsvektors des momentanen Blocks bezüglich der Blöcke des vorangegangenen Bildes in einem Suchfenster mit gegebenen Umfang, das dem dem momentanen Bild vorangegangenen Bild entnommen ist, und zur Speicherung eines Satzes von Fehlerdaten, die sich auf diesen momentanen Block beziehen, wobei der genannte Satz von Fehlerdaten die Karte der Codierfehler für alle möglichen Bewegungsfenster im genannten Fenster, den minimalen Codierfehler und den zu ihm gehörenden Bewegungsvektor umfaßt, der den genannten abgeschätzten Vektor darstellt;

(B) Berechnungsmittel um:

(1) die Prüfung vorzunehmen:

(a) einerseits des genannten Satzes von Fehlerdaten und auf gleiche Weise konstruierten Sätzen von Fehlerdaten, die sich auf zwei Bildbereiche beziehen, die vorheriger Bereich bzw. angrenzender Bereich genannt werden, von denen der eine wenigstens den Block enthält, der dem momentanen Block vorangeht, und der andere wenigstens einen an diesen momentanen Block angrenzenden Block enthält und die beide mit diesem vorherigen Block bzw. mit dem angrenzenden Block einen gemeinsamen abgeschätzten Bewegungsvektor angenommen haben, und

(b) andererseits der beiden Sätze von Fehlerdaten, die auf gleiche Weise konstruiert worden sind und sich auf die neuen vorherigen bzw. angrenzenden Bereiche beziehen, die durch Wiedereinfügen des momentanen Blocks in dem genannten vorherigen Bereich bzw. mit dem genannten angrenzenden Bereich gebildet worden wären;

(2) je nach Ergebnis dieser Prüfung zu entscheiden, daß entweder eine einzige der genannten Wiedereinfügungen in dem alten vorherigen oder dem alten angrenzenden Bereich ausgeführt wird, indem für den neuen so gebildeten vorherigen bzw. angrenzenden Bereich ein abgeschätzer Bewegungsvektor angenommen wird, der dem momentanen Block und dem betreffenden alten Bereich gemeinsam ist;

(b) oder daß beim Ausbleiben eines solchen Wiedereinfügens ein neuer Bereich ausgehend von diesem momentanen Block begonnen wird;

(C) Mittel zur Speicherung der genannten, auf gleiche Weise konstruierten Sätze von Fehlerdaten und der Erfassungsnummern der Bereiche;

(D) eine Einheit zur Steuerung der Verbindungen zwischen den genannten Mitteln zur Abschätzung und Speicherung, Berechnung und Speicherung.

2. Anordnung nach Anspruch 1, dadurch gekennzeichnet, daß die genannten Mittel zur Abschätzung und Speicherung eine Schaltung zur Abschätzung der Bewegung des momentanen Blocks bezüglich derjenigen Blöcke des vorherigen Bildes umfassen, die in dem genannten Fenster zur Suche und Selektion eines globalen Bewegungsvektors dieses momentanen Blocks enthalten sind, und daß dieses Verfahren zur Abschätzung der Bewegung die sogenannte BMA-Methode durch Entsprechung von Blöcken ist, die im genannten Fenster die Suche des Blocks vornimmt, der die dem momentanen Block am nächsten kommenden Leuchtdichteeigenschaften aufweist, wobei dieses Suchfenster sich in der Nachbarschaft des Blocks mit dem Umfang befindet, der durch die maximale Amplitude des gesuchten Bewegungsvektors bestimmt wird.

3. Anordnung nach Anspruch 2, dadurch gekennzeichnet, daß die genannten Mittel zur Speicherung folgendes umfassen:

(a) einen ersten Speicher oder Speicherbereich für den Satz von Fehlerdaten des momentanen Blocks, wie er von der genannten Schaltung zur Abschätzung durch Vergleich zwischen diesem momentanen Block und jedem der genannten, im Suchfenster enthaltenen Blöcke des vorherigen Bildes bestimmt und gespeichert wurde;

(b) als Arbeitsspeicher bezeichnete zweite und dritte Speicher oder Speicherbereiche, die dazu bestimmt sind, im Laufe der Abtastung der Blöcke die genannten Sätze von Fehlerdaten temporär zu speichern, die auf gleiche Weise konstruiert sind und sich zum Zeitpunkt der Abtastung des momentanen Blocks auf die sogenannten, bezüglich dieses momentanen Blocks vorherigen bzw. angrenzenden Bereiche beziehen;

(c) vierte und fünfte Speicher oder Speicherbereiche für die Speicherung der Sätze von Fehlerdaten, die nach dem Treffen der dazugehörigen Entscheidungen über Wiedereinfügung oder Neubeginn den so gebildeten neuen Bereichen im Laufe der Abtastung der Blöcke des momentanen Bildes zugeordnet werden, die nun den genannten momentanen Block enthalten, bzw. für die Speicherung von Erfassungsnummern für diese neuen Bereiche.

4. Anordnung nach einem der Ansprüche 1 bis 3, dadurch gekennzeichnet, daß die genannten Mittel zur Berechnung eine Recheneinheit umfassen, um in Abhängigkeit von wenigstens einem vorab festgelegten Kriterium den Vergleich der genannten Sätze von Fehlerdaten durchzuführen, die sich einerseits jeweils auf den momentanen Block, auf den vorherigen Bereich und auf den genannten angrenzenden Bereich beziehen, und sich andererseits jeweils auf die neuen Bereiche beziehen, die durch Wiedereinfügen gebildet werden würden, und um je nach dem Ergebnis dieser Prüfung zu entscheiden, daß die entsprechende Wiedereinfügung ausgeführt wird oder ansonsten der neue Bereich begonnen wird.

5. Anordnung nach Anspruch 4, dadurch gekennzeichnet, daß je nach dem genannten vorab festgelegten Kriterium eine Entscheidung zur Wiedereinfügung des momentanen Blocks mit nur der einen oder nur der anderen der genannten vorherigen und angrenzenden Bereiche getroffen wird, wenn für nur einen der beiden aus den zwei möglichen Wiedereinfügungen hervorgehenden Bereiche eines der Datenelemente eines bestimmten Typs aus dem Satz von Fehlerdaten des Bereiches, der durch die genannte Wiedereinfügung gebildet werden würde, unterhalb einer vorab bestimmten Grenze bezüglich der Summe von Daten des gleichen Typs in den Sätzen von Fehlerdaten bleibt, die auf gleiche Weise konstruiert sind und sich auf den genannten momentanen Block und auf den genannten, vorherigen oder angrenzenden Bereich beziehen, der der betrachteten Wiedereinfügung entspricht, nur die gegenteilige Situation, in der die beiden Wiedereinfügungen möglich sind, dazu führt, ein zweites vorab festgelegtes Kriterium anzuwenden, um eine dieser beiden Wiedereinfügungen auszuwählen.

6. Anordnung nach Anspruch 5, dadurch gekennzeichnet, daß in der genannten gegenteiligen Situation in den Mitteln zur Speicherung ein sechster Speicher oder Speicherbereich zur Speicherung von Erfassungsnummern für die Bereiche eingerichtet ist, die in dem dem momentanen Bild vorangegangenen Bild gebildet worden sind, um das genannte zweite vorab festgelegte Kriterium durch Prüfung der tatsächlich vorgenommenen Wiedereinfügungen im genannten vorherigen Bild für den Block mit der gleichen Position wie der des momentanen Blocks des momentanen Bildes oder für einen benachbarten Block anzuwenden, der durch ein Fenster begrenzt wird, das um die Position des genannten momentanen Blocks zentriert ist.

7. Anordnung nach einem der Ansprüche 3 oder 4, dadurch gekennzeichnet, daß sie einen Speicher oder Speicherbereich zur Speicherung von zwei Sätzen von Fehlerdaten umfaßt, die auf gleiche Weise konstruiert sind und sich auf jeden der sogenannten spatiotemporalen Bereiche beziehen, die während der Abtastung wenigstens eines oder mehr aufeinanderfolgender, dem momentanen Bild vorangegangener Bilder gebildet worden sind, und daß die Einheit zur Berechnung eingerichtet ist, um in Abhängigkeit von wenigstens einem vorab festgelegten Kriterium die Sätze von abgeschätzten Fehlerdaten zu untersuchen, die sich einerseits jeweils auf den momentanen Block, den vorherigen Bereich, den angrenzenden Bereich und den der genannten spatiotemporalen Bereiche beziehen, der in dem dem momentanen Bild vorangegangenen Bild den Block mit der gleichen Position wie der des momentanen Blocks oder eines Blocks mit einer benachbarten Position enthält, die durch Suchfenster begrenzt ist, das um die Position des genannten momentanen Blocks zentriert ist, und sich andererseits auf die neuen Bereiche bezieht, die durch Wiedereinfügen des momentanen Blocks in dem genannten vorherigen Bereich, dem genannten angrenzenden Bereich, bzw. dem genannten spatiotemporalen Bereich gebildet werden würden, und um je nach Ergebnis dieser Prüfung zu entscheiden, daß das definitive Wiedereinfügen des genannten momentanen Blocks in dem einen oder anderen Bereich durch Annehmen eines gemeinsamen abgeschätzten Bewegungsvektors vorgenommen wird oder ansonsten der neue Bereich ausgehend von dem momentanen Block begonnen wird.

8. Anordnung nach einem der Ansprüche 3 bis 7, dadurch gekennzeichnet, daß sie einen achten Speicher oder Speicherbereich umfaßt, um einerseits den Satz von Fehlerdaten zu speichern, der sich auf einen Block des momentanen Bildes bezieht, und andererseits gleiche Sätze von Fehlerdaten zu speichern, die jeweils für vier diesen Block bildenden Teilblöcke abgeschätzt werden, und daß die Einheit zur Berechnung eingerichtet ist, um vor der genannten Prüfung, die den momentanen Block sowie die zuvor gebildeten Bereiche und die möglichen Wiedereinfügungsbereiche einbezieht, in Abhängigkeit von einem vorab festgelegten Kriterium einen Vergleich durchzuführen von wenigstens einem der Datenelemente eines bestimmten Typs, einem Satz von Fehlerdaten dieses momentanen Blocks und Fehlerdaten gleichen Typs der Teilblöcke und um je nach Ergebnis dieses vorherigen Vergleichs den Ersatz des betreffenden Blocks durch die genannten Teilblöcke vorzunehmen oder nicht, wobei auf den genannten Ersatz dann ein neuer vorheriger Vergleichs- und eventueller Ersatzzyklus folgt, und gegebenenfalls wird in gleicher Weise bis zu einer lokalen Unterteilung in Pixel mit entsprechender Veränderung der Abtastung vor der Vergleichs- und Wiedereinfügungsphase fortgefahren.

## Claims

1. A device for estimating motion between animated images subdivided into bidimensional blocks, characterized in that the device comprises:

(A) means for estimating, within a search window having a given size based on the image preceding the current image, a motion vector of the current block with respect to the blocks of the preceding image, and for storing a set of error data relating to said current block, said set of error data comprising the coding error card for all possible motion vectors in said window, the minimal coding error, and the motion vector which is associated therewith and constitutes said estimated vector;

(B) computation means for:

(1) examining:

(a) on the one hand, said set of error data and sets of error data constructed in a similar manner and relating to two regions of the image referred to as preceding region and contiguous region, respectively, one region including at least the block which precedes the current block and the other region including at least a block which is contiguous to this current block and which regions have each adopted an estimated motion vector which is common for this preceding block and this contiguous block, respectively, and

(b) on the other hand, two sets of error data constructed in a similar manner and relating to new, preceding and contiguous regions, respectively, which would be formed by attaching the current block to said preceding and said contiguous region, respectively;

(2) and for deciding, in accordance with the result of this examination:

(a) either the execution of one of said attachments to the old preceding region or to the old contiguous region by adopting, for the new, preceding or contiguous region thus formed, an estimated motion vector which is common to the current block and to the old region concerned;
(b) or, in the absence of such an attachment, the initialization of a new region based on this current block;

(C) means for memorizing said similarly constructed error data and numbers for marking the regions;
(D) a unit for controlling the connections between said estimation, storage, computation and memorization means.

2. A device as claimed in Claim 1, characterized in that said storage and estimation means comprise a circuit for estimating motion of the current block with respect to those blocks of the preceding image which are included in said search window and for selecting a global motion vector for this current block, and in that this motion estimation method is the BMA method referred to as the block-matching method and providing the search, within said window, of the block which has the luminosity properties which are closest to those of the current block, this search window being a neighbor of the block and having a size which is determined by the maximum amplitude of the searched motion vector.

3. A device as claimed in Claim 2, characterized in that said memorization means comprise:

(a) a first memory or memory area for storing the set of error data of the current block as determined and stored by said estimation circuit by comparison between this current block and each of said blocks of the preceding image within the search window;
(b) second and third memories or memory areas, referred to as working memories and intended, as scanning of the blocks proceeds, for temporarily storing said sets of error data constructed in a similar manner and relating, at the instant of scanning the current block, to the respective regions which precede and are contiguous to this current block;
(c) fourth and fifth memories or memory areas for storing the sets of error data associated, after carrying out the appropriate decisions of attachment and initialization, with the new regions which are thus constituted during scanning of the blocks of the current image and now include said current block, and for storing the numbers for marking these new regions.

4. A device as claimed in any one of Claims 1 to 3, characterized in that said computation means comprise a computation unit for comparing, as a function of at least one predetermined criterion, said sets of error data relating, on the one hand, to the current block, to said preceding region and to said contiguous region, respectively, and, on the other hand, to the new regions which would be formed by attachment, respectively, and for deciding, in accordance with the result of this examination, on the execution of the corresponding attachment or, in the absence thereof, that of the initialization of the new region.

5. A device as claimed in Claim 4, characterized in that, in accordance with said predetermined criterion, a decision of attaching the current block exclusively to one or the other of said preceding and contiguous regions is taken when for only one of the two regions resulting from two possible attachments one of the data of a given type of the set of error data of the region which would be constituted by said attachment remains below a predetermined limit with respect to the sum of the data of the same type in the sets of error data which are constructed in a similar manner and separately relate to said current block and to said preceding or contiguous region corresponding to the attachment considered, while only the contrary situation in which the two attachments are possible lead to the execution of a second predetermined criterion for choosing one of these two attachments.

6. A device as claimed in Claim 5, characterized in that in said contrary situation, said memorization means include a sixth memory or memory area for storing the numbers marking the regions constituted in the image which precedes the current image, for using said second predetermined criterion by examining the attachments effectively realized in said preceding image for the block having the same position as the current block of the current image or for a block having an adjacent position bounded by a window centered on the position of said current block.

7. A device as claimed in Claim 3 or 4, characterized in that the device comprises a memory or a memory area for storing the sets of error data constructed in a similar manner and relating to each of the spatiotemporal regions progressively constituted during scanning of at least the image, or several consecutive images, preceding the current image, and in that the computation unit is provided for examining, as a function of at least a predetermined criterion, sets of estimated error data relating, on the one hand, to the current block, the preceding region, the contiguous region and to those constituted spatiotemporal regions which, in the image preceding said current image, comprise the block having the same position as the current block or a block having an adjacent position which is bounded by the search window centered on the position of said current block, and, on the other hand, to new regions which would be formed by attaching the current block to said preceding region, to said contiguous region and to said spatiotemporal region, respectively, and for deciding, in accordance with the result of this examination, on the execution of the definitive attachment of said current block to one or the other of these regions by adopting a common estimated motion vector or, in the absence of such an attachment, on that of initializing the new region on the basis of the current block.

8. A device as claimed in any one of Claims 3 to 7, characterized in that the device comprises an eighth memory or memory area for storing, on the one hand, the set of error data relating to a block of the current image and, on the other hand, similar sets of error data estimated for four sub-blocks which compose this block, and in that the computation unit is provided for effecting, prior to said examination involving the current block as well as the previously constituted regions and the possible regions of attachment, a comparison as a function of a predetermined criterion of at least one of the data of a given type, of the set of error data of said current block and error data of the same type of the sub-blocks and, in accordance with the result of this prior comparison, for substituting or not substituting said sub-blocks in the block concerned, said substitution being then followed by a new cycle of prior comparison and possible substitution, and so forth, possibly ended by a local subdivision into pixels, with a corresponding modification of the scanning operation, before the comparison and attachment phase.

FIG.1

FIG. 2

FIG. 3